# FASCICULE DE BREVET EUROPEEN

(11) **EP 3 749 571 B1**
(45) Date de publication et mention de la délivrance du brevet: **10.11.2021**
(21) Numéro de dépôt: 19709997.1
(22) Date de dépôt: 22.01.2019
(51) Int. Cl.: B63C 11/02

(54) **DISPOSITIF DE LOCALISATION D'UN PLONGEUR SOUS-MARIN ET PROCEDE DE MISE EN OEUVRE**
VORRICHTUNG ZUM LOKALISIEREN EINES UNTERWASSERTAUCHERS UND VERFAHREN ZUR VERWENDUNG DAVON
DEVICE FOR LOCATING AN UNDERWATER DIVER AND METHOD FOR USING SAME

(30) Priorité: 06.02.2018 FR 1850973
(43) Date de publication de la demande: 16.12.2020
(73) Titulaire: MAUTOM DEVELOPPEMENT, 66330 Cabestany (FR); Allender, Pascal, 75020 Paris (FR); Allender, Dagmar, 75020 Paris (FR)
(72) Inventeur: ALLENDER, Pascal, 75020 PARIS (FR); ALLENDER, Dagmar, 75020 PARIS (FR)
(74) Mandataire: Plasseraud IP
(86) Numéro de dépôt international: PCT/FR2019/050139
(87) Numéro de publication internationale: WO 2019/155139

(56) Documents cités:
- WO-A2-2004/005953
- DE-U1- 9 400 691
- US-A- 5 406 294
- US-A1- 2002 140 599

## Description

L'invention est relative à un dispositif de localisation permettant à un plongeur sous-marin de se localiser, ainsi qu'un procédé de guidage d'un plongeur sous-marin mis en œuvre par un tel dispositif.

Le domaine de l'invention est celui des instruments permettant à un plongeur sous-marin de se repérer et de se déplacer lorsque ce dernier évolue au fond de l'eau, à savoir sous plusieurs mètres d'eau.

De façon bien connue, les systèmes de localisation se basant sur la réception d'un signal par un capteur de position, par exemple un capteur GPS, ne peuvent fonctionner sous l'eau, les signaux se dissipant dans l'eau.

L'état de la technique connaît toutefois du document US 5 406 294 un dispositif de localisation d'un plongeur sous-marin muni d'une antenne flottante prévue pour être relâchée par un plongeur sous l'eau afin de flotter à la surface pour recevoir un signal avant d'être ramenée au fond de l'eau à proximité du plongeur pour un déploiement futur.

Une telle antenne flottante est munie d'un collier gonflable, prévu pour être déployé puis gonflé par l'intermédiaire d'un réservoir sous pression fixé à ladite antenne, le gonflement étant actionné par un bouton fixé sur ladite antenne.

Ladite antenne flottante est reliée par l'intermédiaire d'un câble électrique à un récepteur GPS, configuré pour déterminer la position du plongeur à partir du signal GPS capté par l'antenne flottante, ledit récepteur étant positionné à proximité du plongeur sous l'eau.

Le câble est également prévu pour ramener l'antenne flottante au fond de l'eau à proximité du plongeur pour un déploiement futur.

Un tel dispositif de localisation présente plusieurs inconvénients. Tout d'abord, l'emploi d'un collier gonflable et d'un réservoir sous pression ainsi qu'un bouton de commande complexifie sa conception, et augmente significativement son encombrement et son coût de fabrication.

Les documents WO 2004/005953 A2 ou US 2002/140599 A1 montrent des dispositifs de localisation similaires.

Par ailleurs, le fait d'employer le câble électrique prévu pour transmettre le signal GPS au récepteur GPS comme câble de traction pour ramener l'antenne flottante vers le fond de l'eau augmente le risque de détériorer ledit câble électrique et donc de rendre inopérant ledit dispositif de localisation du plongeur, ou nécessite de prévoir un câble avec une résistance suffisante pour combiner les deux fonctions, ce qui augmente significativement son coût de revient et complexifie sa réalisation.

L'invention se propose donc de pallier aux inconvénients d'un tel dispositif de localisation d'un plongeur sous-marin en proposant un dispositif de localisation d'un plongeur sous-marin permettant de connaître de façon précise la position d'un plongeur sous-marin sans que celui-ci n'ait à remonter à la surface de l'eau, ainsi que de calculer et de lui indiquer un trajet pour se rendre à une position différente, de conception simple, robuste, d'encombrement réduit et de faible coût de revient.

D'autres avantages de l'invention apparaîtront au cours de la description qui va suivre et n'est donnée qu'à titre indicatif.

Ainsi, l'invention concerne un dispositif de localisation d'un plongeur sous-marin, comportant :
- un système flottant comportant :
   - une unité de localisation comprenant :
      o un capteur de position configuré pour recevoir un signal contenant des coordonnées géodésiques (xn, yn) d'une position Pn dudit plongeur,
      o un système d'affichage configuré pour afficher des informations de localisation lisibles par le plongeur, à partir des coordonnées géodésiques (xn, yn) de ladite position Pn déterminées par le capteur de position,
   - un boîtier étanche à l'eau et résistant à la pression de l'eau au moins à une profondeur de 40 mètres, recevant ladite unité de localisation, le boîtier étanche étant au moins partiellement transparent au droit du système d'affichage,
- un câble de traction fixé par l'une de ses extrémités au système flottant, d'une longueur au moins égale à 40 mètres.

Selon l'invention, ledit dispositif est configuré pour permettre la détermination des coordonnées géodésiques (xn, yn) correspondant à la position Pn du plongeur, lorsque le système flottant se trouve à la position Pn sans nécessiter la remontée du plongeur à la surface de l'eau, ledit système flottant étant configuré pour remonter à la surface de l'eau préalablement à la réception du signal contenant les coordonnées géodésiques (xn, yn) par le capteur de position et pour être ramené à proximité du plongeur sous l'eau, par l'intermédiaire du câble de traction, à l'issue de la réception du signal contenant les coordonnées géodésiques (xn, yn) par le capteur de position.

Selon des caractéristiques optionnelles de l'invention, prises seules ou en combinaison :
- l'unité de localisation comprend en outre :
   o une mémoire configurée pour stocker les coordonnées géodésiques (xn, yn) correspondant à différentes positions Pn du plongeur, déterminées et transmises par le capteur de position,
   o un système de calcul configuré pour établir à partir des coordonnées géodésiques (xn, yn) d'au moins deux positions Pn du plongeur, stockées dans ladite mémoire, le trajet à emprunter par le plongeur pour relier lesdites deux positions Pn,
- ledit système d'affichage est configuré pour afficher des informations de guidage lisibles par le plongeur afin de suivre ledit trajet, déterminé et transmis par ledit système de calcul ;
- ledit dispositif est configuré pour permettre la détermination du trajet à emprunter par le plongeur sous l'eau, lorsqu'il se trouve à une position P2, pour se rendre de ladite position P2 de coordonnées géodésiques (x2, y2) vers une position P1 de coordonnées géodésiques (x1, y1), sans nécessiter la remontée du plongeur à la surface de l'eau, le dispositif étant configuré pour la mise en œuvre des étapes suivantes :
   a) détermination des coordonnées géodésiques (x1, y1) correspondant à la position P1 du plongeur, lorsque le système flottant se trouve à ladite position P1,
   b) stockage dans la mémoire de l'unité de localisation des coordonnées géodésiques (x1, y1),
   c) détermination des coordonnées géodésiques (x2, y2) correspondant à la position P2 du plongeur, lorsque le système flottant se trouve à ladite position P2,
   d) stockage dans la mémoire des coordonnées géodésiques (x2, y2),
   e) calcul du trajet permettant au plongeur de se rendre depuis la position P2 vers la position P1,
   f) affichage sur le système d'affichage de l'unité de localisation d'instructions indiquant au plongeur le trajet à emprunter pour se rendre à la position P1 depuis la position P2.
- préalablement à l'étape (a) et/ou préalablement à l'étape (c), le système flottant est configuré pour remonter à la surface de l'eau, et suite à l'étape (a) et/ou à l'étape (c), le système flottant est configuré pour être ramené à proximité du plongeur sous l'eau par l'intermédiaire du câble de traction ;
- ladite extrémité du câble de traction fixée au système flottant est dite première extrémité, la seconde extrémité du câble de traction étant fixée à un dispositif accumulateur pour le câble de traction ;
- le dispositif accumulateur est un système d'enrouleur à commande manuelle, comprenant une manivelle pour l'actionnement en rotation d'un tambour d'enroulement ;
- le boitier étanche est résistant à la pression de l'eau au moins à une profondeur de 100 mètres, ledit câble de traction étant de longueur au moins égale à 100 mètres ;
- le système flottant (10) est configuré de sorte à recevoir un effort de poussée compris entre 0,5 N et 2 N lorsqu'immergé complètement dans l'eau,
- le boîtier étanche comprend une portion de réception de l'unité de localisation et une portion de fixation, telles que :
   - ladite portion de réception est de forme cylindrique creuse, d'axe, définissant un logement pour la réception de l'unité de localisation,
   - ladite portion de fixation est de forme conique pointant à l'opposé de la portion de réception, d'axe confondu avec l'axe de la portion de réception, fixée dans le prolongement de la portion de réception, ladite portion de fixation recevant en fixation l'extrémité du câble de traction.
- la portion de fixation est creuse et est réalisée en tissu perméable à l'eau ;
- ladite portion de réception du boîtier étanche présente un volume compris entre 400 et 800 cm³,
- le capteur de position de ladite unité de localisation est un capteur GPS ;
- les instructions affichées par le système d'affichage au cours de l'étape d) comprennent une information de distance, correspondant à la distance séparant la position P1 de la position P2 et une information de cap, correspondant à l'inclinaison, au niveau du point P2, par rapport à la direction Nord Sud de la droite passant par la position P1 et par la position P2.
- ledit dispositif comprend un bouton d'actionnement, étanche, accessible à l'extérieur du boitier étanche, permettant de commander l'unité de localisation,
- l'unité de localisation comporte un moyen d'émission à ondes acoustiques, configuré pour émettre un signal acoustique depuis ladite unité de localisation, ledit signal acoustique étant configuré pour être reçu par un élément distinct de ladite unité de localisation.

L'invention concerne également un procédé de guidage avec la détermination du trajet à emprunter par un plongeur sous l'eau, lorsqu'il se trouve à une position P2, pour se rendre de ladite position P2 de coordonnées géodésiques (x2, y2) vers une position P1 de coordonnées géodésiques (x1, y1), mis en œuvre au moyen d'un dispositif selon l'invention, ledit procédé étant mis en œuvre sans nécessiter la remontée du plongeur à la surface de l'eau, par la mise en œuvre des étapes suivantes :
a) détermination des coordonnées géodésiques (x1, y1) correspondant à la position P1 du plongeur, lorsque le système flottant se trouve à ladite position P1,
b) stockage dans la mémoire des coordonnées géodésiques (x1, y1),
c) détermination des coordonnées géodésiques (x2, y2) correspondant à la position P2 du plongeur, lorsque le système flottant se trouve à ladite position P2,
d) stockage dans la mémoire des coordonnées géodésiques (x2, y2),
e) calcul du trajet permettant au plongeur de se rendre depuis la position P2 vers la position P1,
f) affichage sur le système d'affichage d'instructions indiquant au plongeur le trajet à emprunter pour se rendre à la position P1 depuis la position P2,
dans lequel préalablement à l'étape a) et/ou préalablement à l'étape c), le système flottant est remonté à la surface de l'eau, et suite à l'étape a) et/ou à l'étape c), le système flottant est ramené à proximité du plongeur sous l'eau par l'intermédiaire du câble de traction.

Selon un mode de réalisation du procédé, l'unité de localisation comporte en outre un moyen de détermination du cap suivi par le plongeur, un moyen de détermination de la vitesse du plongeur et un moyen de détermination du temps de déplacement du plongeur, ledit procédé comprenant en outre une étape g) de détermination du trajet suivi par le plongeur, au cours de laquelle on détermine le trajet suivi par le plongeur à partir du cap suivi par le plongeur déterminé par le moyen de détermination du cap suivi par le plongeur, de la vitesse du plongeur déterminée par le moyen de détermination de la vitesse du plongeur, et du temps de déplacement du plongeur déterminé par le moyen de détermination du temps de déplacement du plongeur.

L'invention sera mieux comprise à la lecture de la description suivante accompagnée des figures en annexe, parmi lesquelles :
- La figure 1 est une vue représentant schématiquement un plongeur sous la surface de l'eau muni d'un dispositif selon un mode de réalisation conforme à l'invention,
- La figure 2 est une vue selon la figure 1, dans lequel le dispositif est remonté à la surface de l'eau,
- La figure 3 est une vue représentant schématiquement différentes positions occupées par un plongeur dont les coordonnées géodésiques ont été récupérées grâce à un dispositif selon un mode de réalisation conforme à l'invention,
- La figure 4 est une vue d'un dispositif selon un mode de réalisation conforme à l'invention,
- La figure 5 est une vue représentant schématiquement l'unité de localisation d'un dispositif selon un mode de réalisation conforme à l'invention,
- La figure 6a est une vue représentant schématiquement des instructions de guidage affichées par un système d'affichage d'un dispositif selon un mode de réalisation conforme à l'invention,
- La figure 6b est une vue représentant schématiquement des instructions de guidage affichées par un système d'affichage d'un dispositif selon un mode de réalisation alternatif,
- La figure 7a est une vue représentant schématiquement des informations affichées par un système d'affichage d'un dispositif selon un mode de réalisation conforme à l'invention,
- La figure 7b est une vue représentant schématiquement des informations affichées par un système d'affichage d'un dispositif selon un mode de réalisation alternatif,
- La figure 8 est une vue en coupe de la portion de réception d'un boîtier étanche d'un dispositif selon un mode de réalisation conforme à l'invention,
- La figure 9a est une vue schématique représentant schématiquement l'unité de localisation d'un dispositif selon un mode de réalisation conforme à l'invention,
- La figure 9b est une vue schématique représentant schématiquement l'unité de localisation d'un dispositif selon un mode de réalisation conforme à l'invention.

L'invention concerne un dispositif de localisation 1 d'un plongeur sous-marin P, comportant :
- un système flottant 10 comportant :
   - une unité de localisation 2 comprenant :
      o un capteur de position 21 configuré pour recevoir un signal contenant des coordonnées géodésiques (xn, yn) d'une position Pn dudit plongeur,
      o un système d'affichage 22 configuré pour afficher des informations de localisation lisibles par le plongeur, à partir des coordonnées géodésiques (xn, yn) de ladite position Pn déterminées par le capteur de position 21,
   - un boîtier 3 étanche à l'eau et résistant à la pression de l'eau, au moins à une profondeur de 40 mètres, recevant ladite unité de localisation 2, le boîtier étanche 3 étant au moins partiellement transparent au droit du système d'affichage,
- un câble de traction 4 fixé par l'une de ses extrémités 41 au système flottant, d'une longueur au moins égale à 40 mètres.

Selon l'invention, ledit dispositif 1 est configuré pour permettre la détermination des coordonnées géodésiques (xn, yn) correspondant à la position Pn du plongeur, lorsque le système flottant 10 se trouve à la position Pn sans nécessiter la remontée du plongeur P à la surface S, ledit système flottant 10 étant configuré pour remonter à la surface S de l'eau préalablement à la réception du signal contenant les coordonnées géodésiques (xn, yn) par le capteur de position 21 et pour être ramené à proximité du plongeur P sous l'eau, par l'intermédiaire du câble de traction 4, à l'issue de la réception du signal contenant les coordonnées géodésiques (xn, yn) par le capteur de position 21.

Ainsi, grâce au dispositif 1 de localisation selon l'invention, le plongeur sous-marin P peut connaître sa position très précisément sans avoir à remonter à la surface S.

Par ailleurs, le système flottant 10 combine les fonctions de logement des différents éléments électroniques de l'unité de localisation 2 et de remontée et de flottaison à la surface S de l'eau grâce à sa flottabilité. Ainsi, il n'y a pas besoin de prévoir d'éléments supplémentaires distincts du système flottant 10 pour assurer l'une ou l'autre de ces fonctions, ce qui simplifie la conception du dispositif 1 de localisation selon l'invention, augmente sa robustesse et réduit son coût de revient. La flottabilité du système flottant 10 peut être assurée uniquement par l'ensemble boîtier 3 et unité de localisation 2 (reçue dans le boîtier 3) qui est de densité inférieure à 1, et avantageusement sans flotteur supplémentaire à cet ensemble. En particulier, de préférence, aucune étape de gonflage n'est prévue pour permettre la remontée du système flottant 10.

Par ailleurs, il n'est pas non plus nécessaire de prévoir de câble électrique à l'extérieur du boîtier pour relier différents éléments électroniques entre eux. Notamment, le câble de traction 4 peut avantageusement être de ce fait un câble prévu uniquement à cet effet, ce qui simplifie également la conception du dispositif 1 de localisation selon l'invention, augmente sa robustesse et réduit son coût de revient.

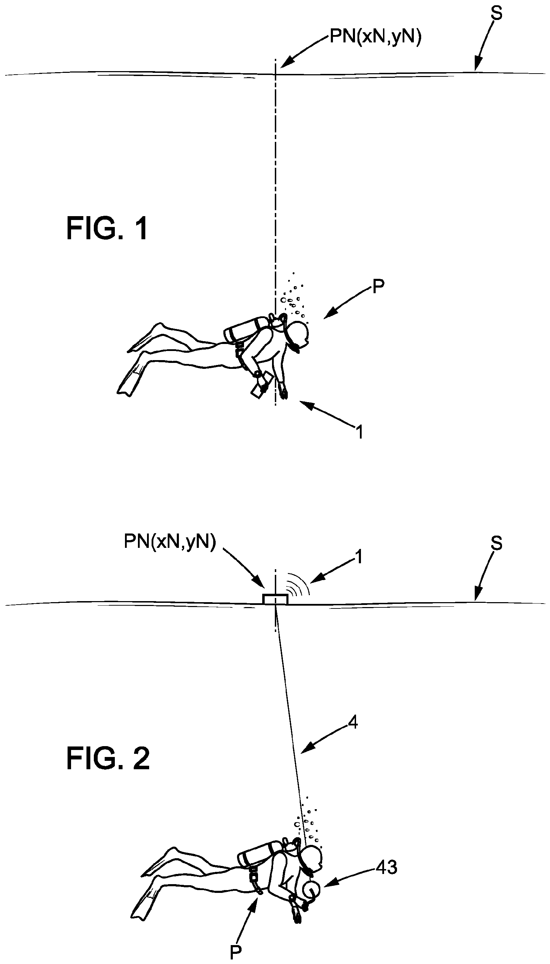

Comme visible sur l'exemple de réalisation de la figure 1, le plongeur sous-marin P qui se trouve sous l'eau à la position Pn maintient à proximité de lui, par exemple dans sa main, le système flottant 10.

S'il souhaite connaître sa position Pn, il peut par exemple uniquement relâcher le système flottant 10, qui, à cause de sa flottabilité va remonter à la surface S, sensiblement au droit du plongeur P, le plongeur maintenant, par exemple dans sa main, le câble de traction 4.

Une fois arrivée à la surface S, comme visible sur l'exemple de réalisation de la figure 2, ladite unité de localisation 2 récupère le signal contenant les coordonnées géodésiques (xn, yn) correspondant à la position Pn du plongeur P et les transmet au système d'affichage 22 qui va alors les afficher.

Après un temps suffisant pour que ladite unité de localisation 2 ait pu récupérer convenablement le signal contenant les coordonnées géodésiques (xn, yn) de la position Pn, le plongeur peut ramener le système flottant 10 à proximité de lui par l'intermédiaire du câble de traction 4 et prendre connaissance des coordonnées géodésiques (xn, yn) affichées sur le système d'affichage 22, pour connaître précisément sa position Pn.

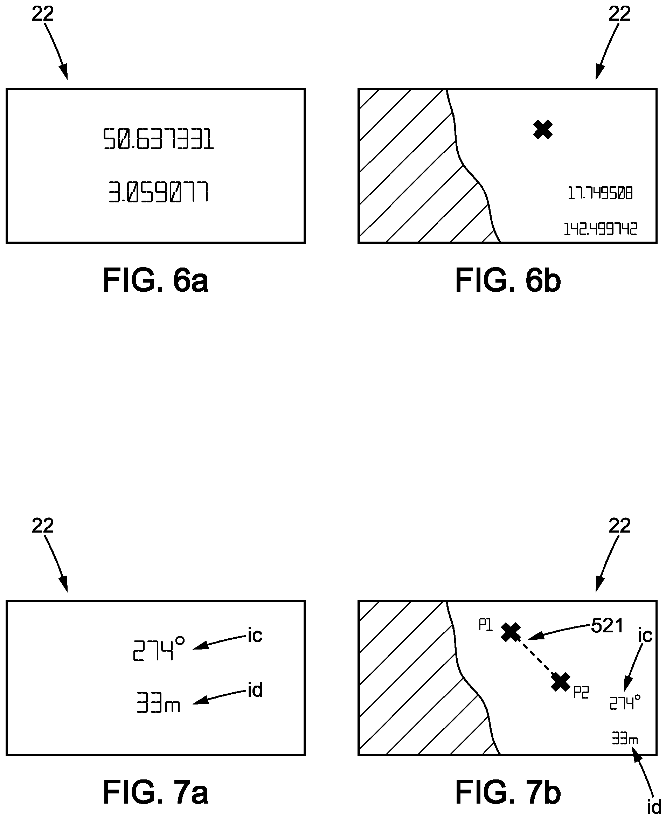

L'affichage des coordonnées géodésiques (xn, yn) sur le système d'affichage 22 peut se faire tel quel, par exemple sous la forme de coordonnées GPS, comme visible sur l'exemple de réalisation de la figure 6a.

Alternativement, ou en complément, l'affichage des coordonnées géodésiques (xn, yn) peut se faire de façon schématique, par exemple avec une représentation graphique de la zone dans laquelle se trouve le plongeur P, et/ou avec un élément indiquant la position Pn du plongeur P, par exemple une croix ou tout autre symbole, comme visible sur l'exemple de réalisation de la figure 6b.

Le câble de traction 4 est par exemple réalisé sous la forme d'un cordage tressé, notamment textile, et est par exemple fixé au niveau de son extrémité 41 sur le boîtier étanche 3, par l'intermédiaire d'un moyen de fixation 46 par exemple un nœud ou un mousqueton au niveau d'une portion d'accrochage 31 du boîtier 3.

Le système d'affichage 22 peut comprendre un écran, par exemple un écran LCD.

Avantageusement, le capteur de position 21 peut comprendre une antenne (non représentée) prévue pour recevoir ledit signal contenant les coordonnées géodésiques (xn, yn). Avantageusement, le capteur de position 21 est positionné sur l'unité de localisation 2 de telle sorte que l'antenne soit orientée vers le haut (selon une direction opposée à la surface de l'eau S), lorsque ledit système flottant 10 est positionné à la surface S de l'eau.

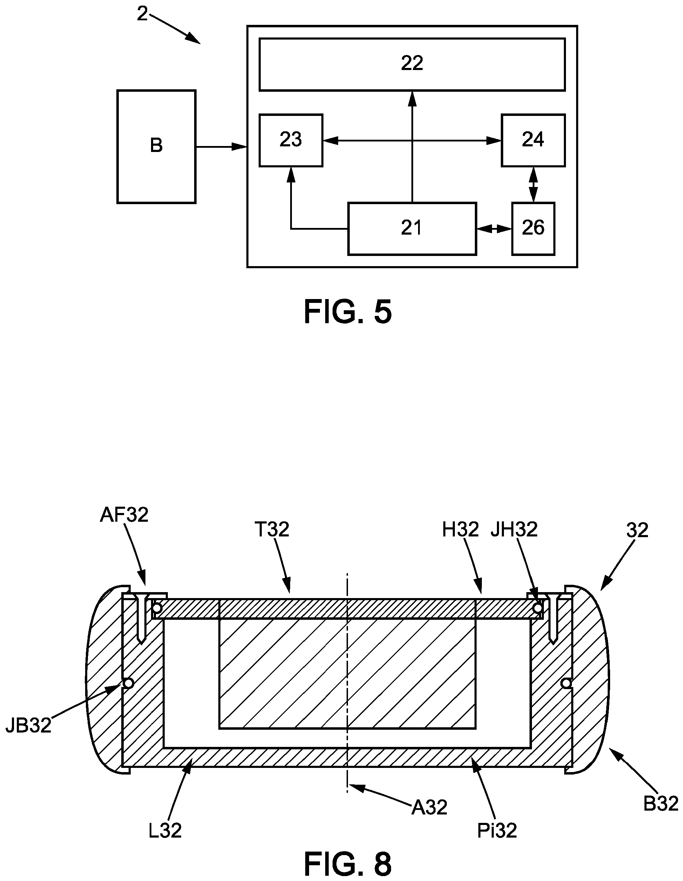

Avantageusement, comme visible sur l'exemple de réalisation de la figure 5, l'ensemble des éléments de ladite unité de localisation 2 sont montés sur une même carte électronique 25 à microcontrôleur, par exemple une carte électronique Arduino ®.

Ladite unité de localisation 2 est avantageusement alimentée en électricité par l'intermédiaire d'un moyen de stockage d'électricité B, comme par exemple une batterie ou une ou plusieurs piles, ainsi qu'éventuellement une électronique de charge, positionnée(s) également dans le boîtier étanche 3.

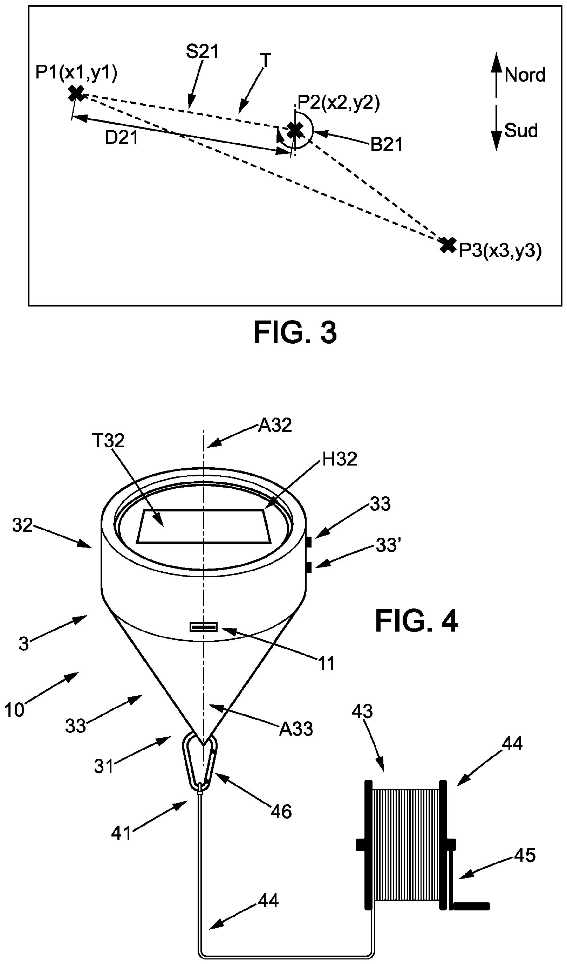

Avantageusement, comme visible sur l'exemple de réalisation de la figure 4, un port de connexion 26 peut être prévu, éventuellement relié à ladite carte électronique 25 à microcontrôleur, et/ou encore au moyen de stockage d'électricité, afin par exemple de récupérer des données issues du capteur de position 21 et/ou d'alimenter ledit moyen de stockage en électricité, notamment pour le recharger.

Avantageusement, un port de connexion déporté 12 peut être prévu au niveau du boîtier étanche 3, en communication directe avec ledit port de connexion 26, afin de pouvoir connecter ledit port de connexion 26 sans avoir à ouvrir le boîtier étanche 3. Un capuchon étanche (non représenté) pouvant avantageusement être prévu afin de ne pas nuire à l'étanchéité du boîtier étanche 3 au niveau dudit port de connexion déporté 12.

Avantageusement le port de connexion 26 et/ou le port de connexion déporté 12 peut être un port USB.

Selon un mode de réalisation, l'unité de localisation 2 comprend en outre :
o une mémoire 23 configurée pour stocker les coordonnées géodésiques (xn, yn) correspondant à différentes positions Pn du plongeur P, déterminées et transmises par le capteur de position 21,
o un système de calcul 24 configuré pour établir à partir des coordonnées géodésiques (xn, yn) d'au moins deux positions Pn du plongeur P, stockées dans ladite mémoire 23, le trajet à emprunter par le plongeur P pour relier lesdites deux positions (Pn).

Selon ce mode de réalisation, ledit système d'affichage 22 est configuré pour afficher des informations de guidage lisibles par le plongeur P afin de suivre ledit trajet T, déterminé et transmis par ledit système de calcul 24.

Le dispositif 1 peut ainsi être configuré pour permettre la détermination du trajet T à emprunter par le plongeur P sous l'eau, lorsqu'il se trouve à une position P2, pour se rendre de ladite position P2 de coordonnées géodésiques (x2, y2) vers une position P1 de coordonnées géodésiques (x1, y1), sans nécessiter la remontée du plongeur P à la surface S de l'eau, le dispositif 1 étant configuré pour la mise en œuvre des étapes suivantes :
a) détermination des coordonnées géodésiques (x1, y1) correspondant à la position P1 du plongeur, lorsque le système flottant 10 se trouve à ladite position P1,
b) stockage dans la mémoire 23 des coordonnées géodésiques (x1, y1),
c) détermination des coordonnées géodésiques (x2, y2) correspondant à la position P2 du plongeur, lorsque le système flottant 10 se trouve à ladite position P2,
d) stockage dans la mémoire 23 des coordonnées géodésiques (x2, y2),
e) calcul du trajet T permettant au plongeur P de se rendre depuis la position P2 vers la position P1,
f) affichage sur le système d'affichage 22 d'instructions indiquant au plongeur le trajet (T) à emprunter pour se rendre à la position P1 depuis la position P2.

Selon ce mode de réalisation, préalablement à l'étape (a) et/ou préalablement à l'étape (c), le système flottant est configuré pour remonter à la surface S de l'eau, et suite à l'étape (a) et/ou à l'étape (c), le système flottant est configuré pour être ramené à proximité du plongeur sous l'eau par l'intermédiaire du câble de traction.

Grâce à cette disposition avantageuse de l'invention, le plongeur P, peut rapidement et simplement obtenir des informations très précises, nécessaires pour se rendre d'une position P2 vers une position P1, sans avoir à remonter à la surface S de l'eau.

Ainsi, comme visible sur l'exemple de réalisation de la figure 3, le plongeur P peut récupérer des premières coordonnées géodésiques (x1, y1) correspondant à une première position P1, correspondant par exemple à une position de départ du plongeur P, par exemple à proximité du rivage ou d'un bateau.

La récupération des premières coordonnées géodésiques (x1, y1) se fait de la même manière que décrit précédemment, à la différence près qu'alternativement ou simultanément à la transmission des coordonnées géodésiques (x1, y1) au système d'affichage 22, celles-ci sont transmises à la mémoire 23 afin d'être stockées.

Le plongeur P peut ensuite récupérer des deuxièmes coordonnées géodésiques (x2, y2) correspondant à une deuxième position P2, de la même manière que décrit précédemment, lesdites coordonnées géodésiques (x2, y2) étant également transmises à la mémoire 23 afin d'être stockées.

Avantageusement, ladite mémoire 23 est une mémoire non-volatile, par exemple une mémoire EEPROM (*«Electrically Erasable Programmable Read Only Memory »*) intégrée au microcontrôleur de la carte à microcontrôleur, afin de pouvoir conserver les différentes coordonnées géodésiques (xn, yn) correspondant aux différentes positions Pn du plongeur P, après mise hors tension du dispositif 1 de localisation, par exemple pour une utilisation future.

Ladite mémoire 23 peut avantageusement être positionnée et connectée sur la carte électronique 25 à microcontrôleur.

Le système de calcul 24 peut ensuite récupérer sur la mémoire 23 les coordonnées géodésiques (x1, y1) et (x2, y2) correspondant respectivement aux positions P1 et P2 afin de calculer le trajet T permettant au plongeur P de se rendre depuis la position P2 vers la position P1.

Comme visible sur l'exemple de réalisation de la figure 3, afin de calculer ledit trajet T, le système de calcul 24 peut par exemple tracer virtuellement un segment S21 reliant la position P2, matérialisée par un point P2 de coordonnées géodésiques (x2, y2), vers la position P1, matérialisée par un point P1 de coordonnées géodésiques (x1, y1), puis déterminer la longueur D21 d'un tel segment S21 et son orientation β21 par rapport à la direction Nord - Sud, au point P2.

Le système de calcul 24 peut ensuite transmettre ledit trajet T au système d'affichage 22 afin de l'afficher.

Comme visible sur l'exemple de réalisation de la figure 7a, ledit trajet T peut être affiché sous la forme d'une suite d'informations, par exemple la longueur D21 et l'orientation β21, au niveau du point P2, par rapport à la direction Nord - Sud du segment S21 reliant les positions P1 et P2.

Alternativement, ou en complément, comme visible sur l'exemple de réalisation de la figure 7b, l'affichage du trajet T peut se faire de façon schématique, par exemple avec une représentation graphique de la zone dans laquelle se trouve le plongeur P, et/ou avec un élément indiquant la position P1 et un autre la position P2 du plongeur P, par exemple une croix ou tout autre symbole, ainsi qu'un élément indiquant le trajet T, par exemple un trait en pointillés.

Avantageusement, le système de calcul 24 peut comprendre un microcontrôleur, par exemple le microcontrôleur de la carte électronique 25 à microcontrôleur.

Avantageusement, la mémoire 23 de l'unité de localisation 2 peut être configurée pour stocker une pluralité de positions Pn de coordonnées géodésiques (xn, yn), récupérées par le plongeur P, correspondant par exemple à divers points d'intérêt pour le plongeur P.

Le plongeur P, lorsqu'il se trouve à une position P2 peut choisir quelle position Pn il souhaite atteindre depuis sa position P2 actuelle, le calculateur 24 calculant alors le trajet T lui permettant d'atteindre ladite position Pn depuis la position P2, de la même façon que décrite ci-dessus.

Selon un mode de réalisation, ladite extrémité 41 du câble de traction 4 fixée au système flottant 10 est dite première extrémité 41, la seconde extrémité 42 du câble de traction 4 étant fixée à un dispositif accumulateur 43 pour le câble de traction 4.

Grâce à cette disposition avantageuse, ledit câble de traction 4, dont la longueur est relativement importante, peut être facilement rangé et donc transporté par le plongeur P mais également déployé pour permettre au système flottant 10 de remonter à la surface S.

Selon un mode de réalisation, le dispositif accumulateur 43 est un système d'enrouleur 43 à commande manuelle, comprenant une manivelle 45 pour l'actionnement en rotation d'un tambour d'enroulement 44.

Comme visible sur l'exemple de réalisation de la figure 4, ladite manivelle 45 peut être actionnée par le plongeur P lorsque celui-ci souhaite faire remonter le système flottant 10 à la surface S pour récupérer les coordonnées géodésiques (xn, yn) correspondant à sa position Pn. La longueur libre du câble de traction 4 est ainsi augmentée et peut ensuite être réduite en actionnant ladite poignée 45 en sens inverse pour exercer un effort de traction permettant de ramener ledit système flottant 10 à proximité du plongeur P.

Selon un mode de réalisation, le boitier étanche 3 est résistant à la pression de l'eau au moins à une profondeur de 100 mètres, ledit câble de traction 4 étant de longueur au moins égale à 100 mètres.

Cette disposition avantageuse de l'invention permet au plongeur P de connaître sa position Pn lorsqu'il se trouve à une profondeur sous la surface S de l'eau inférieure à 100m.

Selon un mode de réalisation, le système flottant 10 est configuré de sorte à recevoir un effort de poussée FP compris entre 0,5 N et 2N, lorsqu'immergé complètement dans l'eau.

De plus, la densité du système flottant 10 (sur lequel est éventuellement fixé ledit moyen de fixation 43 de l'extrémité 41 du câble de traction 4) va également influer sur la valeur de la force de poussée qui va s'exercer sur le système flottant 10 lorsque celui-ci va remonter à la surface.

Grâce à cette disposition avantageuse de l'invention, l'effort de poussée reçu par le système flottant, lorsqu'immergé complètement dans l'eau, est suffisant pour assurer une remontée rapide du système flottant à la surface S, mais n'est pas non plus trop important pour ne pas que le système flottant 10 décolle de l'eau en arrivant à la surface S, et risque de se retourner, ce qui empêcherait une réception dans de bonnes conditions du signal contenant les coordonnées géodésiques (xn, yn) correspondant à la position Pn.

Avantageusement, la densité du système flottant 10 (sur lequel est éventuellement fixé ledit moyen de fixation 43 de l'extrémité 41 du câble de traction 4), qui doit obligatoirement être inférieure à 1 pour assurer sa flottaison, peut être comprise entre 0,6 et 0,8.

Selon un mode de réalisation, le boîtier étanche 3 comprend une portion de réception 32 de l'unité de localisation 2 et une portion de fixation 33, telles que :
- ladite portion de réception 32 est de forme cylindrique creuse, d'axe A32, définissant un logement pour la réception de l'unité de localisation 2,
- ladite portion de fixation 33 est de forme conique pointant à l'opposé de la portion de réception 32, d'axe A33 confondu avec l'axe A32 de la portion de réception 32, fixée dans le prolongement de la portion de réception 32, ladite portion de fixation 33 recevant en fixation l'extrémité 41 du câble de traction 4.

Grâce à cette disposition avantageuse de l'invention, le boîtier 3 a une forme optimale pour loger l'unité de localisation 2, et éventuellement son moyen B d'alimentation électrique mais également pour se diriger vers le haut en direction de la surface S de l'eau ou vers le bas depuis la surface S de l'eau, avant ou après la récupération des coordonnées géodésiques (xn, yn) correspondant à la position Pn par l'unité de localisation.

En effet, ladite portion de réception 32 assure la réception de ladite unité de localisation, et éventuellement de son moyen B d'alimentation électrique, et sa bonne orientation lors de son déplacement depuis ou en direction de la surface S de l'eau est essentiellement assurée par la portion de fixation 33, grâce à sa forme conique.

A cet effet, le boîtier 3 est prévu pour être positionné lors de son déplacement en direction ou vers la surface S de l'eau de telle sorte que la pointe du cône de la portion de fixation 33 pointe à l'opposé de la surface S de l'eau. Comme visible sur l'exemple de réalisation de la figure 4, l'extrémité 41 du câble de traction 4 est prévue pour être fixée à proximité de la pointe du cône de la portion de fixation 33, au niveau de la portion d'accrochage 31.

Un œillet de réception (non représenté) peut être prévu au niveau de ladite portion d'accrochage 31.

Afin d'améliorer encore la bonne orientation du boîtier étanche 3 lors de son déplacement vers ou depuis la surface S de l'eau, un lest (non représenté) peut être prévu sur la portion de fixation 33, au niveau de la pointe du cône.

Avantageusement, ledit œillet de réception, éventuellement au niveau de la portion d'accrochage 31, ou encore le moyen de fixation 46, peuvent remplir la fonction de lest.

Ladite portion de réception 32 peut être réalisée en plusieurs parties, comme visible sur l'exemple de réalisation de la figure 4 :
- une partie de logement L32 de forme cylindrique, d'axe A32, comprenant une paroi supérieure H32 et une paroi inférieure Pi32, ladite partie de logement L32 étant dimensionnée et conformée de sorte à recevoir l'unité de localisation 2,
- une bague de protection B32, de forme cylindrique, d'axe A32, dimensionnée et conformée de sorte à entourer ladite partie de logement L32 et à lui assurer une protection contre les chocs.

Un moyen d'étanchéité JB32, par exemple un joint torique, peut être prévu entre la bague de protection B32 et la partie de logement L32.

Avantageusement, comme visible sur la figure 4, ladite paroi supérieure H32 comprend par exemple une portion transparente T32, par exemple en acrylique, permettant au plongeur P de lire les informations affichées sur le système d'affichage 22, l'unité de localisation 2 étant avantageusement positionnée dans la partie de logement L32 de la portion de réception 32 de telle sorte que le système d'affichage 22 soit orienté vers ladite paroi supérieure H32.

Ladite paroi supérieure H32 peut être réalisée sous la forme d'une pièce distincte du reste de la partie de logement L32, afin de servir également de couvercle pour permettre un accès à l'unité de localisation 2, lorsque positionné dans ladite partie de logement L32. La fixation de ladite paroi supérieure H32 sur ladite partie de logement L32 étant par exemple effectué par l'intermédiaire d'un anneau de fixation AF32, d'axe A32 de dimensions telles que la paroi supérieur H32 se retrouve enserrée entre ledit anneau de fixation AF32 et la partie de logement L32, un moyen d'étanchéité JH32, par exemple un joint torique pouvant également être prévu entre la paroi supérieure H32 et la partie de logement L32 afin d'assurer une fixation étanche de la paroi supérieure H32 sur la partie de logement L32.

Les différentes parties de la portion de réception 32 peuvent avantageusement être réalisées dans des matériaux plastiques différents afin de remplir au mieux leurs différentes fonctions.

Ainsi, la bague de protection B32 peut par exemple être réalisée en élastomère, un matériau de faible densité permettant d'assurer une flottabilité satisfaisante à la portion de réception, et la partie de logement L32 en PVC (Polychlorure de vinyle), permettant d'assurer une rigidité et une robustesse afin de protéger l'unité de localisation 2 des agressions extérieures.

Selon un mode de réalisation, la portion de fixation 33 est creuse et est réalisée en tissu perméable à l'eau.

Grâce à cette disposition avantageuse, ladite portion de fixation 33 va pouvoir prendre une position de stockage, dans laquelle elle se retrouve aplatie afin d'occuper un volume minimal et d'être par exemple rangée dans une poche du plongeur P, et une position de fonctionnement, dans laquelle elle va se remplir d'eau pour prendre sa forme conique et être utilisée pour assurer le déplacement du système flottant.

Par ailleurs, l'emploi d'une portion de fixation 33 creuse en tissu perméable à l'eau est plus avantageuse que l'emploi d'une pluralité de fils d'accrochages, en ce qu'elle ne risque pas de s'emmêler lors du stockage dudit dispositif flottant 10 entre deux utilisations.

Avantageusement, le tissu peut être du polyester, dont la structure peut avantageusement s'apparenter à de la « maille drapeaux ».

Ladite portion de fixation 33 en tissu peut être fixée à la portion de réception 32 du boîtier étanche 3 par tout moyen connu de l'Homme du métier.

Avantageusement, la portion de fixation 33 peut être enfilée autour de la partie de logement L32 du boîtier étanche 3, et être enserrée par la bague de protection B32, laquelle est fixée à ladite partie de logement L32, afin d'assurer la fixation de la portion de fixation 33 à la portion de réception 32.

Selon un mode de réalisation, ladite portion de réception 32 du boîtier étanche 3 présente un volume compris entre 400 et 800 cm³.

Grâce à cette disposition avantageuse de l'invention, le boîtier étanche 3 présente un volume permettant un stockage et un transport aisé par le plongeur P entre deux utilisations.

Selon un mode de réalisation, le capteur de position 21 de ladite unité de localisation 2 est un capteur GPS.

De façon bien connue, le capteur de position 21 va ainsi capter un signal émis par une pluralité de satellites lorsque le système flottant 10 se trouve à la surface S de l'eau afin de connaître les coordonnées géodésiques (xn, yn) correspondant à la position Pn du plongeur P.

Selon un mode de réalisation, les instructions affichées par le système d'affichage 22 au cours de l'étape d) comprennent une information de distance id, correspondant à la distance D21 séparant la position P1 de la position P2 et une information de cap ic, correspondant à l'orientation β21, dans le sens horaire, au niveau du point P2, par rapport à la direction Nord Sud de la droite passant par la position P1 et par la position P2.

En effet, sous l'eau, le chemin le plus court pour relier une position P2 à une position P1 est une droite. Ainsi, grâce à ces deux seules informations, le plongeur P peut, en utilisant par exemple également une boussole, pour trouver le cap ic indiqué, se rendre aisément à la position P1.

Comme visible sur l'exemple de réalisation de la figure 7b, le système d'affichage peut afficher, en complément de ladite information de cap ic et de ladite information de distance d, une représentation graphique de la zone dans laquelle se trouve le plongeur P, et éventuellement une représentation graphique des positions P1 et P2, par exemple des croix, ainsi qu'éventuellement une représentation graphique du segment S21 reliant la position P2 à la position P1.

Selon un mode de réalisation, ledit dispositif 1 comprend un bouton d'actionnement 33, 33', étanche, accessible à l'extérieur du boitier étanche 3 permettant de commander l'unité de localisation 2.

Un tel bouton d'actionnement 33, 33' permet avantageusement d'initier une ou plusieurs des fonctions du dispositif 1 de localisation selon l'invention.

Le bouton d'actionnement 33, 33' peut avantageusement être un bouton poussoir.

Par exemple une pression du plongeur P sur le bouton d'actionnement 33, 33' permet d'amorcer la réception du signal contenant les coordonnées géodésiques (xn, yn) correspondant à la position Pn par l'unité de localisation 2.

Le bouton d'actionnement 33, 33' peut également amorcer l'une ou l'autre des étapes de la détermination du trajet T à emprunter par un plongeur P afin de se rendre d'une position P2 vers une position P1, décrite précédemment, et notamment l'étape a), c) ou e).

Afin de limiter les risques de nuire à l'étanchéité du boîtier étanche 3, et notamment à sa portion de réception 32, un nombre minimal de boutons d'actionnement 33, 33' doit être prévu afin d'assurer la commande de l'unité de localisation 2.

Un unique bouton d'actionnement 33 peut ainsi être prévu afin de commander l'unité de localisation 2.

Dans le cas où le dispositif 1 permet la détermination du trajet T à emprunter par un plongeur P afin de se rendre d'une position P2 vers une position P1, le bouton d'actionnement permet d'initier l'étape a) et l'étape c), l'étape b) étant exécutée automatiquement à la fin de l'étape a) et les étapes d) à f) étant exécutées automatiquement à la fin de l'étape c).

Alternativement, comme visible sur l'exemple de réalisation de la figure 4, uniquement deux boutons d'actionnement 33, 33' peuvent être prévus afin de commander l'unité de localisation 2, notamment dans le cas où le dispositif 1 permet la détermination du trajet T à emprunter par un plongeur P afin de se rendre d'une position P2 à laquelle il se trouve, vers une position P1, décrite précédemment.

Par exemple un premier bouton d'actionnement 33 permet d'initier l'une ou l'autre des étapes a), c) ou e), l'étape b) étant exécutée automatiquement à la fin de l'étape a) et l'étape d) étant exécutée automatiquement à la fin de l'étape c).

Un deuxième bouton d'actionnement 33' permet de sélectionner une des postions Pn que le plongeur P souhaite atteindre depuis la position P2 de coordonnées géodésiques (x2, y2) à laquelle il se trouve et dont il vient de récupérer lesdites coordonnées géodésiques (x2, y2).

Une fois ladite position Pn sélectionnée l'étape e) peut être initiée par pression sur le premier bouton d'actionnement 33, l'étape f) étant exécutée automatiquement à la fin de l'étape e).

Comme visible sur l'exemple de réalisation de la figure 4, ledit bouton d'actionnement 33, 33' peut être ménagé au niveau de la partie de logement L32 de la portion de réception 32 afin d'être à proximité de l'unité de localisation 2, une fois celle-ci mise en place dans ladite portion de réception 32.

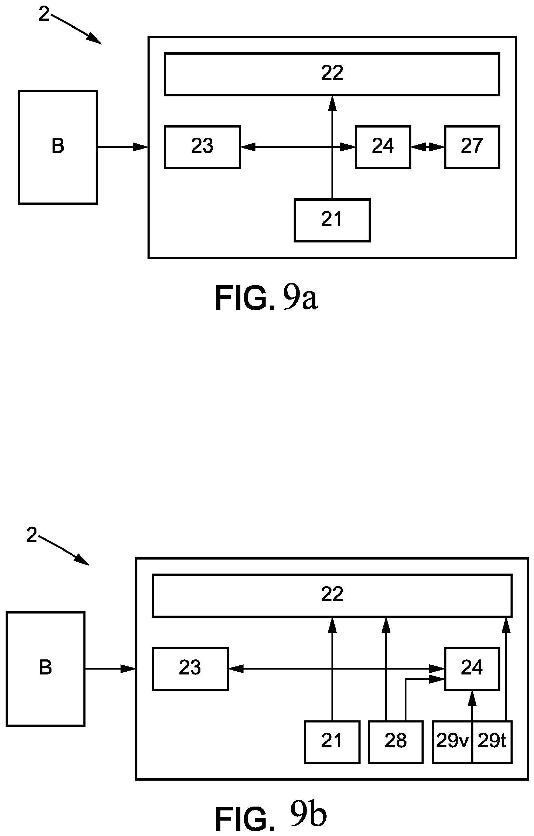

Selon un mode de réalisation, visible par exemple sur l'exemple de réalisation de la figure 9a, l'unité de localisation 2 comporte un moyen d'émission à ondes acoustiques 27, configuré pour émettre un signal acoustique depuis ladite unité de localisation 2, ledit signal acoustique étant configuré pour être reçu par un élément distinct de ladite unité de localisation 2.

Ainsi, grâce à cette disposition avantageuse de l'invention, l'unité de localisation 2 du dispositif de localisation 1 peut transmettre des données, notamment celles déterminées par le capteur de position 21 ou par le système de calcul 24 à un élément distinct de ladite unité de localisation, sous l'eau, sans nécessiter de liaison filaire, les ondes acoustiques émises par ledit moyen d'émission à ondes acoustiques 27 étant aptes à transmettre des données sous l'eau.

La fréquence desdites ondes acoustiques peut notamment être choisie de telle sorte que lesdites ondes acoustiques soient des ondes ultrasonores, afin de faciliter leur propagation sous l'eau.

Ledit élément distinct peut par exemple être un moyen d'affichage, distinct du système d'affichage 22 de ladite unité de localisation 2, et notamment un dispositif d'affichage configuré pour venir se fixer directement sur le masque du plongeur (P), comme par exemple l'écran de l'ordinateur commercialisé sous la marque GALILEO HUD ® par la société SCUBAPRO, et destiné à se fixer sur un masque de plongeur.

Selon un mode de réalisation, l'unité de localisation 2 peut également comporter :
- un moyen 28 de détermination du cap suivi par le plongeur P, en particulier un compas, et/ou,
- un moyen 29v de détermination de la vitesse du plongeur P, et/ou,
- un moyen 29t de détermination du temps de déplacement du plongeur P.

Comme visible sur l'exemple de réalisation de la figure 9b, ledit moyen 28 de détermination du cap suivi par le plongeur P peut être relié au système d'affichage 22 afin d'afficher le cap suivi par le plongeur P lors de son déplacement sous l'eau.

Le moyen 29v de détermination de la vitesse du plongeur P peut être intégré au système de calcul 24, ou être prévu comme un élément distinct dudit système de calcul 24, communicant éventuellement avec celui-ci.

Comme visible sur l'exemple de réalisation de la figure 9b, ledit moyen 29v de détermination de la vitesse du plongeur P peut également communiquer avec ledit système d'affichage 22 afin d'afficher la vitesse de déplacement du plongeur P.

Egalement, le moyen 29t de détermination du temps de déplacement du plongeur P, peut être intégré au système de calcul 24, ou être prévu comme un élément distinct dudit système de calcul 24, communicant éventuellement avec celui-ci.

Comme visible sur l'exemple de réalisation de la figure 9b, ledit moyen 29t de détermination du temps de déplacement du plongeur P peut également communiquer avec ledit système d'affichage 22 afin d'afficher le temps de déplacement du plongeur P.

Le moyen 29t de détermination du temps de déplacement du plongeur P peut par exemple être un chronomètre.

Le moyen 29v de détermination de la vitesse du plongeur P peut par exemple être prévu pour déterminer la vitesse du plongeur P à partir de la distance séparant deux positions P1 et P2 distinctes, dont les coordonnées géodésiques (x1, y1) et (x2, y2) ont été déterminées par ledit dispositif de localisation 1, et du temps de déplacement du plongeur P entre ces deux positions, déterminé par exemple par ledit moyen 29t de détermination du temps de déplacement du plongeur P.

A cet effet, ledit moyen 29v de détermination de la vitesse du plongeur P peut avantageusement être configuré de sorte qu'il est estimé que le plongeur P s'est déplacé sensiblement en ligne droite entre la position P1 et la position P2 et avec une vitesse de déplacement sensiblement constante.

L'invention concerne également un procédé de guidage d'un plongeur P avec la détermination du trajet T à emprunter par un plongeur P sous l'eau, pour se rendre d'une position P2 de coordonnées géodésiques (x2, y2) vers une position P1 de coordonnées géodésiques (x1, y1), mis en œuvre au moyen d'un dispositif 1 selon l'invention, ledit procédé étant mis en œuvre sans nécessiter la remontée du plongeur P à la surface S de l'eau, par la mise en œuvre des étapes suivantes :
a) détermination des coordonnées géodésiques (x1, y1) correspondant à la position P1 du plongeur P, lorsque le système flottant 10 se trouve à ladite position P1,
b) stockage dans la mémoire 23 de l'unité de localisation 2 des coordonnées (x1, y1),
c) détermination des coordonnées géodésiques (x2, y2) correspondant à la position P2 du plongeur P, lorsque le système flottant 10 se trouve à ladite position P2,
d) stockage dans la mémoire 23 de l'unité de localisation 2 des coordonnées géodésiques (x2, y2),
e) calcul du trajet T permettant au plongeur de se rendre depuis la position P2 vers la position P1,
f) affichage sur le système d'affichage 22 de l'unité de localisation d'instructions indiquant au plongeur P le trajet T à emprunter pour se rendre à la position P1 depuis la position P2.

Selon l'invention, de préférence, préalablement à l'étape a) et/ou préalablement à l'étape c), le système flottant est remonté à la surface de l'eau, et suite à l'étape a) et/ou à l'étape c), le système flottant est ramené à proximité du plongeur sous l'eau par l'intermédiaire du câble de traction.

Selon un mode de réalisation, l'unité de localisation 2 comporte en outre un moyen 28 de détermination du cap suivi par le plongeur P, un moyen 29v de détermination de la vitesse du plongeur P et un moyen 29t de détermination du temps de déplacement du plongeur P, ledit procédé comprenant en outre une étape g) de détermination du trajet T' suivi par le plongeur P, au cours de laquelle on détermine le trajet T' suivi par le plongeur P à partir du cap suivi par le plongeur P déterminé par le moyen 28 de détermination du cap suivi par le plongeur P, du temps, de la vitesse du plongeur P déterminée par le moyen 29v de détermination de la vitesse du plongeur P, et du temps de déplacement du plongeur P déterminé par le moyen 29t de détermination du temps de déplacement du plongeur P.

Avantageusement, dans le cas où ledit trajet T' diffère du trajet T déterminé au cours de l'étape e), il peut être prévu d'avertir le plongeur P, par exemple par l'intermédiaire de l'affichage d'un avertissement sur ledit système d'affichage 22.

Il est également éventuellement envisageable de réitérer ensuite les étapes c) à f) du procédé selon l'invention, en déterminant les coordonnées géodésiques (x2, y2) d'une nouvelle position P2 à laquelle se trouve le plongeur P, et en déterminant un nouveau trajet T permettant de se rendre à la position P1, dont les coordonnées géodésiques (x1, y1) ont été initialement déterminées au cours de l'étape a) du procédé, et stockées dans la mémoire 23 au cours de l'étape b), depuis la nouvelle position P2.

Naturellement, d'autres modes de réalisation auraient pu être envisagés par l'Homme du métier sans pour autant sortir du cadre de l'invention définie par les revendications ci-après.

### NOMENCLATURE

1. Dispositif de localisation
10. Système flottant
11. Port de connexion
2. Unité de localisation
21. Capteur de position
22. Système d'affichage
23. Mémoire
24. Système de calcul
25. Carte électronique
26. Port de connexion
27. Moyen d'émission à ondes acoustiques
28. Moyen de détermination du cap
29v. Moyen de détermination de la vitesse
29t. Moyen de détermination du temps
3. Boîtier étanche
31. Portion d'accrochage
32. Portion de réception
A32. Axe
B32. Bague de protection
L32. Partie de logement
JB32, JH32. Joint d'étanchéité
H32. Paroi supérieure
Pi32. Paroi inférieure
T32. Portion transparente
33. Portion de fixation
A33. Axe
4. Câble de traction
41. Première extrémité
42. Seconde extrémité
43. Dispositif accumulateur
44. Tambour d'enroulement
45. Manivelle
46. Moyen de fixation
P. Plongeur
S. Surface
P1, P2, P3, Pn. Position
(x1, y1), (x2, y2), (xn, yn). Coordonnées
D21. Distance
S21. Segement
β21. Orientation
ic. Information de cap
id. information de distance

## Revendications

1. Dispositif (1) de localisation, permettant à un plongeur sous-marin (P) de se localiser, comportant :
- un système flottant (10) comportant :
- une unité de localisation (2) comprenant :
o un capteur de position (21) configuré pour recevoir un signal contenant des coordonnées géodésiques (xn, yn) d'une position (Pn) dudit plongeur,
o un système d'affichage (22) configuré pour afficher des informations de localisation lisibles par le plongeur (P), à partir des coordonnées géodésiques (xn, yn) de ladite position (Pn) déterminées par le capteur de position (21),
- un boîtier (3) étanche à l'eau et résistant à la pression de l'eau au moins à une profondeur de 40 mètres, recevant ladite unité de localisation (2), le boîtier étanche (3) étant au moins partiellement transparent au droit du système d'affichage (22),
- un câble de traction (4) fixé par l'une de ses extrémités (41) au système flottant (10), d'une longueur au moins égale à 40 mètres,
ledit dispositif (1) étant configuré pour permettre la détermination des coordonnées géodésiques (xn, yn) correspondant à la position (Pn) du plongeur (P), lorsque le système flottant (10) se trouve à la position (Pn) sans nécessiter la remontée du plongeur (P) à la surface (S) de l'eau, ledit système flottant (10) étant configuré pour remonter à la surface (S) de l'eau préalablement à la réception du signal contenant les coordonnées géodésiques (xn, yn) par le capteur de position (21) et pour être ramené à proximité du plongeur (P) sous l'eau, par l'intermédiaire du câble de traction (4), à l'issue de la réception du signal contenant les coordonnées géodésiques (xn, yn) par le capteur de position (21).

2. Dispositif (1) selon la revendication 1 dans lequel l'unité de localisation (2) comprend en outre :
o une mémoire (23) configurée pour stocker les coordonnées géodésiques (xn, yn) correspondant à différentes positions (Pn) du plongeur (P), déterminées et transmises par le capteur de position (21),
o un système de calcul (24) configuré pour établir à partir des coordonnées géodésiques (xn, yn) d'au moins deux positions (Pn) du plongeur (P), stockées dans ladite mémoire (23), le trajet (T) à emprunter par le plongeur (P) pour relier lesdites deux positions (Pn),
ledit système d'affichage (22) étant configuré pour afficher des informations de guidage lisibles par le plongeur (P) afin de suivre ledit trajet (T), déterminé et transmis par ledit système de calcul (24),
ledit dispositif (1) étant configuré pour permettre la détermination du trajet (T) à emprunter par le plongeur (P) sous l'eau, lorsqu'il se trouve à une position (P2), pour se rendre de ladite position (P2) de coordonnées géodésiques (x2, y2) vers une position (P1) de coordonnées géodésiques (x1, y1), sans nécessiter la remontée du plongeur (P) à la surface (S) de l'eau, le dispositif (1) étant configuré pour la mise en œuvre des étapes suivantes :
a) détermination des coordonnées géodésiques (x1, y1) correspondant à la position (P1) du plongeur (P), lorsque le système flottant (10) se trouve à ladite position (P1),
b) stockage dans la mémoire (23) de l'unité de localisation (2) des coordonnées géodésiques (x1, y1),
c) détermination des coordonnées géodésiques (x2, y2) correspondant à la position (P2) du plongeur (P), lorsque le système flottant (10) se trouve à ladite position (P2),
d) stockage dans la mémoire (23) des coordonnées géodésiques (x2, y2),
e) calcul du trajet (T) permettant au plongeur (P) de se rendre depuis la position (P2) vers la position (P1),
f) affichage sur le système d'affichage (22) de l'unité de localisation (2) d'instructions indiquant au plongeur (P) le trajet (T) à emprunter pour se rendre à la position (P1) depuis la position (P2),
dans lequel préalablement à l'étape (a) et/ou préalablement à l'étape (c), le système flottant (10) est configuré pour remonter à la surface (S) de l'eau, et suite à l'étape (a) et/ou à l'étape (c), le système flottant (10) est configuré pour être ramené à proximité du plongeur sous l'eau par l'intermédiaire du câble de traction (4).

3. Dispositif (1) selon la revendication 1 ou 2, dans lequel ladite extrémité (41) du câble de traction (4) fixée au système flottant (10) est dite première extrémité (41), la seconde extrémité (42) du câble de traction (4) étant fixée à un dispositif accumulateur (43) pour le câble de traction (4).

4. Dispositif (1) selon l'une des revendications 1 à 3, dans lequel le dispositif accumulateur (43) est un système d'enrouleur à commande manuelle, comprenant une manivelle (45) pour l'actionnement en rotation d'un tambour d'enroulement (44).

5. Dispositif (1) selon l'une des revendications 1 à 4, dans lequel le boitier étanche (3) est résistant à la pression de l'eau au moins à une profondeur de 100 mètres, ledit câble de traction (4) étant de longueur au moins égale à 100 mètres.

6. Dispositif (1) selon l'une des revendications 1 à 5, dans lequel le système flottant (10) est configuré de sorte à recevoir un effort de poussée compris entre 0,5 N et 2 N lorsque immergé complètement dans l'eau.

7. Dispositif (1) selon l'une des revendications 1 à 6, dans lequel le boîtier étanche (3) comprend une portion de réception (32) de l'unité de localisation (2) et une portion de fixation (33), telles que :
- ladite portion de réception (32) est de forme cylindrique creuse, d'axe (A32), définissant un logement pour la réception de l'unité de localisation (2),
- ladite portion de fixation (33) est de forme conique pointant à l'opposé de la portion de réception, d'axe (A33) confondu avec l'axe (A32) de la portion de réception (32), fixée dans le prolongement de la portion de réception (32), ladite portion de fixation (33) recevant en fixation l'extrémité (41) du câble de traction (4).

8. Dispositif (1) selon la revendication 7, dans lequel la portion de fixation (33) est creuse et est réalisée en tissu perméable à l'eau.

9. Dispositif (1) selon l'une des revendications 7 ou 8, dans lequel ladite portion de réception (32) du boîtier étanche (3) présente un volume compris entre 400 et 800 cm³.

10. Dispositif (1) selon l'une des revendications 1 à 9, dans lequel le capteur de position (21) de ladite unité de localisation (2) est un capteur GPS.

11. Dispositif (1) selon la revendication 2 prise seule ou en combinaison avec l'une quelconque des revendications 3 à 10, dans lequel les instructions affichées par le système d'affichage (22) au cours de l'étape d) comprennent une information de distance (id), correspondant à la distance (D21) séparant la position (P1) de la position (P2) et une information de cap (ic), correspondant à l'inclinaison (β21), au niveau du point (P2), par rapport à la direction Nord Sud de la droite passant par la position (P1) et par la position (P2).

12. Dispositif (1) selon l'une des revendications 1 à 11 dans lequel ledit dispositif (1) comprend un bouton d'actionnement (33, 33'), étanche, accessible à l'extérieur du boitier étanche (3), permettant de commander l'unité de localisation (2).

13. Dispositif (1) selon l'une des revendications 1 à 12, dans lequel l'unité de localisation (2) comporte un moyen d'émission à ondes acoustiques (27), configuré pour émettre un signal acoustique depuis ladite unité de localisation (2), ledit signal acoustique étant configuré pour être reçu par un élément distinct de ladite unité de localisation (2).

14. Procédé de guidage d'un plongeur (P) avec la détermination du trajet (T) à emprunter par un plongeur (P) sous l'eau lorsqu'il se trouve à une position (P2), pour se rendre de ladite position (P2) de coordonnées géodésiques (x2, y2) vers une position (P1) de coordonnées géodésiques (x1, y1), mis en œuvre au moyen d'un dispositif (1) selon la revendication 2 prise seule ou en combinaison avec l'une quelconque des revendications 3 à 13, ledit procédé étant mis en œuvre sans nécessiter la remontée du plongeur (P) à la surface (S) de l'eau, par la mise en œuvre des étapes suivantes :
a) détermination des coordonnées géodésiques (x1, y1) correspondant à la position (P1) du plongeur (P), lorsque le système flottant (10) se trouve à ladite position (P1),
b) stockage dans la mémoire (23) des coordonnées géodésiques (x1, y1),
c) détermination des coordonnées géodésiques (x2, y2) correspondant à la position (P2) du plongeur (P), lorsque le système flottant (10) se trouve à ladite position (P2),
d) stockage dans la mémoire (23) des coordonnées géodésiques (x2, y2),
e) calcul du trajet (T) permettant au plongeur (P) de se rendre depuis la position (P2) vers la position (P1),
f) affichage sur le système d'affichage (22) d'instructions indiquant au plongeur (P) le trajet (T) à emprunter pour se rendre à la position (P1) depuis la position (P2),
dans lequel préalablement à l'étape a) et/ou préalablement à l'étape c), le système flottant (10) est remonté à la surface (S) de l'eau, et suite à l'étape a) et/ou à l'étape c), le système flottant (10) est ramené à proximité du plongeur (P) sous l'eau par l'intermédiaire du câble de traction (4).

15. Procédé de guidage d'un plongeur (P) selon la revendication 14, dans lequel l'unité de localisation (2) comporte en outre un moyen (28) de détermination du cap suivi par le plongeur (P), un moyen (29v) de détermination de la vitesse du plongeur (P) et un moyen (29t) de détermination du temps de déplacement du plongeur (P), ledit procédé comprenant en outre une étape g) de détermination du trajet (T') suivi par le plongeur (P), au cours de laquelle on détermine le trajet (T') suivi par le plongeur (P) à partir du cap suivi par le plongeur (P) déterminé par le moyen (28) de détermination du cap suivi par le plongeur (P), de la vitesse du plongeur (P) déterminée par le moyen (29v) de détermination de la vitesse du plongeur (P), et du temps de déplacement du plongeur (P) déterminé par le moyen (29t) de détermination du temps de déplacement du plongeur (P).

## Patentansprüche

1. Lokalisierungsvorrichtung (1), die es einem Taucher (P) erlaubt, sich zu lokalisieren, die umfasst:
- ein schwimmendes System (10), das umfasst:
- eine Lokalisierungseinheit (2), die umfasst:
o einen Positionssensor (21), der dazu konfiguriert ist, ein Signal zu empfangen, das geodätische Koordinaten (xn, yn) einer Position (Pn) des Tauchers enthält,
o ein Anzeigesystem (22), das dazu konfiguriert ist, Lokalisierungsinformationen, die für den Taucher (P) lesbar sind, ausgehend von den geodätischen Koordinaten (xn, yn) der Position (Pn), die von dem Positionssensor (21) bestimmt werden, anzuzeigen,
- ein wasserdichtes Gehäuse (3), das dem Druck des Wassers mindestens in einer Tiefe von 40 Metern standhält, das die Lokalisierungseinheit (2) aufnimmt, wobei das dichte Gehäuse (3) an der Stelle des Anzeigesystems (22) mindestens teilweise durchsichtig ist,
- ein Zugkabel (4), das an einem seiner Enden (41) an dem schwimmenden System (10) befestigt ist, mit einer Länge von mindestens gleich 40 Metern,
wobei die Vorrichtung (1) dazu konfiguriert ist, das Bestimmen der geodätischen Koordinaten (xn, yn), die der Position (Pn) des Tauchers (P) entsprechen, zu erlauben, wenn sich das schwimmende System (10) an der Position (Pn) befindet, ohne das Aufsteigen des Tauchers (P) an die Oberfläche (S) des Wassers zu erfordern, wobei das schwimmende System (10) dazu konfiguriert ist, vor dem Empfang des Signals, das die geodätischen Koordinaten (xn, yn) durch den Positionssensor (21) enthält, an die Oberfläche (S) des Wassers zu steigen, und um über das Zugkabel (4) nach dem Empfang des Signals, das die geodätischen Koordinaten (xn, yn)durch den Positionssensor (21) enthält, in die Nähe des Tauchers (P) unter Wasser gebracht zu werden.

2. Vorrichtung (1) nach Anspruch 1, wobei die Lokalisierungseinheit (2) außerdem umfasst:
o einen Speicher (23), der dazu konfiguriert ist, die geodätischen Koordinaten (xn, yn), die unterschiedlichen Positionen (Pn) des Tauchers (P) entsprechen, die von dem Positionssensor (21) bestimmt und übertragen werden, zu speichern,
o ein Rechensystem (24), das dazu konfiguriert ist, ausgehend von den geodätischen Koordinaten (xn, yn) von mindestens zwei Positionen (Pn) des Tauchers (P), die in dem Speicher (23) gespeichert sind, die Bahn (T), der der Taucher (P) folgen muss, um die zwei Positionen (Pn) zu verbinden, zu ermitteln,
wobei das Anzeigesystem (22) dazu konfiguriert ist, Führungsinformationen anzuzeigen, die für den Taucher (P) lesbar sind, um der Bahn (T), die von dem Rechensystem (24) bestimmt und übertragen wird, zu folgen,
wobei die Vorrichtung (1) dazu konfiguriert ist, das Bestimmen der Bahn (T), der der Taucher (P) unter dem Wasser folgen soll, zu erlauben, wenn er sich in einer Position (P2) befindet, um sich von der Position (P2) mit den geodätischen Koordinaten (x2, y2) zu einer Position (P1) mit den geodätischen Koordinaten (x1, y1) zu begeben, ohne das Aufsteigen des Tauchers (P) an die Oberfläche (S) des Wassers zu erfordern, wobei die Vorrichtung (1) zur Umsetzung der folgenden Schritte konfiguriert ist:
a) Bestimmen der geodätischen Koordinaten (x1, y1), die der Position (P1) des Tauchers (P) entsprechen, wenn sich das schwimmende System (10) an der Position (P1) befindet,
b) Speichern der Lokalisierungseinheit (2) der geodätischen Koordinaten (x1, y1) in dem Speicher (23),
c) Bestimmen der geodätischen Koordinaten (x2, y2), die der Position (P2) des Tauchers (P) entsprechen, wenn sich das schwimmende System (10) an der Position (P2) befindet,
d) Speichern der geodätischen Koordinaten (x2, y2) in dem Speicher (23),
e) Berechnung der Bahn (T), die es dem Taucher (P) erlaubt, sich von der Position (P2) zu der Position (P1) zu begeben,
f) Anzeige auf dem Anzeigesystem (22) der Lokalisierungseinheit (2) von Anweisungen, die dem Taucher (P) die Bahn (T) angeben, der er folgen soll, um sich von der Position (P2) zu der Position (P1) zu begeben,
wobei vor dem Schritt (a) und/oder vor dem Schritt (c) das schwimmende System (10) dazu konfiguriert ist, an die Oberfläche (S) des Wassers aufzusteigen, und im Anschluss an den Schritt (a) und/oder an den Schritt (c) das schwimmende System (10) dazu konfiguriert ist, über das Zugkabel (4) in die Nähe des Tauchers unter Wasser zurückgebracht zu werden.

3. Vorrichtung (1) nach Anspruch 1 oder 2, wobei das Ende (41) des Zugkabels (4), das an dem schwimmenden System (10) befestigt ist, erstes Ende (41) genannt wird, wobei das zweite Ende (42) des Zugkabels (4) an einer Sammelvorrichtung (43) für das Zugkabel (4) befestigt ist.

4. Vorrichtung (1) nach einem der Ansprüche 1 bis 3, wobei die Sammelvorrichtung (43) ein Wickelsystem mit manueller Steuerung ist, das eine Kurbel (45) für die Drehbetätigung einer Wickeltrommel (44) umfasst.

5. Vorrichtung (1) nach einem der Ansprüche 1 bis 4, wobei das dichte Gehäuse (3) dem Druck des Wassers in mindestens einer Tiefe von 100 Metern standhält, wobei das Zugkabel (4) eine Länge von mindestens gleich 100 Metern aufweist.

6. Vorrichtung (1) nach einem der Ansprüche 1 bis 5, wobei das schwimmende System (10) derart konfiguriert ist, dass es eine Schubkraft zwischen 0,5 N und 2 N aufnimmt, wenn es vollständig in das Wasser eingetaucht ist.

7. Vorrichtung (1) nach einem der Ansprüche 1 bis 6, wobei das dichte Gehäuse (3) einen Abschnitt (32) zur Aufnahme der Lokalisierungseinheit (2) und einen Befestigungsabschnitt (33) umfasst, die derart sind, dass:
- der Aufnahmeabschnitt (32) eine hohle zylindrische Form aufweist, mit einer Achse (A32), die eine Unterbringung für die Aufnahme der Lokalisierungseinheit (2) definiert,
- wobei der Befestigungsabschnitt (33) eine konische Form aufweist, die zu der entgegengesetzten Seite des Aufnahmeabschnitts zeigt, mit einer Achse (A33), die mit der Achse (A32) des Aufnahmeabschnitts (32) zusammenfällt, der in der Verlängerung des Aufnahmeabschnitts (32) befestigt ist, wobei der Befestigungsabschnitt (33) das Ende (41) des Zugkabels (4) zur Befestigung aufnimmt.

8. Vorrichtung (1) nach Anspruch 7, wobei der Befestigungsabschnitt (33) hohl ist und aus wasserdurchlässigem Gewebe hergestellt ist.

9. Vorrichtung (1) nach einem der Ansprüche 7 oder 8, wobei der Aufnahmeabschnitt (32) des dichten Gehäuses (3) ein Volumen zwischen 400 und 800 cm³ aufweist.

10. Vorrichtung (1) nach einem der Ansprüche 1 bis 9, wobei der Positionssensor (21) der Lokalisierungseinheit (2) ein GPS-Sensor ist.

11. Vorrichtung (1) nach Anspruch 2, allein oder in Kombination mit einem der Ansprüche 3 bis 10 genommen, wobei die Anweisungen, die von dem Anzeigesystem (22) im Laufe des Schritts d) angezeigt werden, eine Entfernungsinformation (id), die der Entfernung (D21) entspricht, die die Position (P1) von der Position (P2) trennt, und eine Kursinformation (ic), die der Neigung (β21) auf dem Niveau des Punktes (P2) in Bezug zu der Richtung Nord-Süd der Geraden, die durch die Position (P1) und die Position (P2) durchgeht, entspricht, umfassen.

12. Vorrichtung (1) nach einem der Ansprüche 1 bis 11, wobei die Vorrichtung (1) einen dichten Betätigungsknopf (33, 33') umfasst, der von der Außenseite des dichten Gehäuses (3) zugänglich ist, der es erlaubt, die Lokalisierungseinheit (2) zu steuern.

13. Vorrichtung (1) nach einem der Ansprüche 1 bis 12, wobei die Lokalisierungseinheit (2) ein Schallwellenübertragungsmittel (27) umfasst, das dazu konfiguriert ist, ein akustisches Signal von der Lokalisierungseinheit (2) abzugeben, wobei das akustische Signal dazu konfiguriert ist, von einem getrennten Element der Lokalisierungseinheit (2) empfangen zu werden.

14. Verfahren zum Führen eines Tauchers (P) mit der Bestimmung der Bahn (T), der ein Taucher (P) unter Wasser folgen soll, wenn er sich in einer Position (P2) befindet, um sich von der Position (P2) mit den geodätischen Koordinaten (x2, y2) zu einer Position (P1) mit den geodätischen Koordinaten (x1, y1) zu begeben, das mittels einer Vorrichtung (1) nach Anspruch 2 allein oder in Kombination mit einem der Ansprüche 3 bis 13 genommen umgesetzt wird, wobei das Verfahren umgesetzt wird, ohne das Aufsteigen des Tauchers (P) an die Oberfläche (S) des Wassers zu erfordern, durch Umsetzung der folgenden Schritte:
a) Bestimmen der geodätischen Koordinaten (x1, y1), die der Position (P1) des Tauchers (P) entsprechen, wenn sich das schwimmende System (10) an der Position (P1) befindet,
b) Speichern der geodätischen Koordinaten (x1, y1) in dem Speicher (23),
c) Bestimmen der geodätischen Koordinaten (x2, y2), die der Position (P2) des Tauchers (P) entsprechen, wenn sich das schwimmende System (10) an der Position (P2) befindet,
d) Speichern der geodätischen Koordinaten (x2, y2) in dem Speicher (23),
e) Berechnung der Bahn (T), die es dem Taucher (P) ermöglicht, sich von der Position (P2) zu der Position (P1) zu begeben,
f) Anzeige auf dem Anzeigesystem (22) von Anweisungen, die dem Taucher (P) die Bahn (T) angeben, der er folgen soll, um sich von der Position (P2) zu der Position (P1) zu begeben, wobei vor dem Schritt a) und/oder vor dem Schritt c) das schwimmende System (10) an die Oberfläche (S) des Wassers geholt wird, und im Anschluss an den Schritt a) oder an den Schritt c) das schwimmende System (10) über das Zugkabel (4) in die Nähe des Tauchers (P) unter Wasser zurückgebracht wird.

15. Verfahren zum Führen eines Tauchers (P) nach Anspruch 14, wobei die Lokalisierungseinheit (2) außerdem ein Mittel (28) zur Bestimmung des Kurses, dem der Taucher (P) folgt, ein Mittel (29v) zur Bestimmung der Geschwindigkeit des Tauchers (P) und ein Mittel (29t) zur Bestimmung der Fortbewegungszeit des Tauchers (P) umfasst, wobei das Verfahren außerdem einen Schritt g) zur Bestimmung der Bahn (T'), der der Taucher (P) folgt, umfasst, während der die Bahn (T'), der der Taucher (P) folgt, ausgehend von dem Kurs, dem der Taucher (P) folgt, das von dem Mittel (28) zur Bestimmung des Kurses, dem der Taucher (P) folgt, bestimmt wird, der Geschwindigkeit des Tauchers (P), die von dem Mittel (29v) zur Bestimmung der Geschwindigkeit des Tauchers (P) bestimmt wird, und der Fortbewegungszeit des Tauchers (P), die von dem Mittel (29t) zur Bestimmung der Fortbewegungszeit des Tauchers (P) bestimmt wird, bestimmt wird.

## Claims

1. A location device (1), allowing an underwater diver (P) to locate himself, including:
- a floating system (10) including:
- a location unit (2) including:
o a position sensor (21) configured to receive a signal containing geodetic coordinates (xn, yn) of a position (Pn) of said diver,
o a display system (22) configured to display location information readable by the diver (P), from the geodetic coordinates (xn, yn) of said position (Pn) determined by the position sensor (21),
- a casing (3) which is waterproof and resistant to water pressure at least at a depth of 40 metres, receiving said location unit (2), the waterproof casing (3) being at least partially transparent to the right of the display system (22),
- a traction cable (4) fixed by one of the ends (41) thereof to the floating system (10), with a length at least equal to 40 metres,
said device (1) being configured to allow the determination of the geodetic coordinates (xn, yn) corresponding to the position (Pn) of the diver (P), when the floating system (10) is in the position (Pn) without requiring the re-ascension of the diver (P) to the surface (S) of the water, said floating system (10) being configured to rise to the surface (S) of the water prior to the reception of the signal containing the geodetic coordinates (xn, yn) by the position sensor (21) and to be brought back close to the underwater diver (P), via the traction cable (4), at the end of the reception of the signal containing the geodetic coordinates (xn, yn) by the position sensor (21).

2. The device (1) according to claim 1 wherein the location unit (2) further comprises:
o a memory (23) configured to store the geodetic coordinates (xn, yn) corresponding to different positions (Pn) of the diver (P), which are determined and transmitted by the position sensor (21),
o a calculation system (24) configured to establish from the geodetic coordinates (xn, yn) of at least two positions (Pn) of the diver (P), stored in said memory (23), the path (T) to be taken by the diver (P) to connect said two positions (Pn),
said display system (22) being configured to display guide information readable by the diver (P) in order to follow said path (T), which is determined and transmitted by said calculation system (24),
said device (1) being configured to allow the determination of the path (T) to be taken by the underwater diver (P), when he is at a position (P2), to go from said position (P2) of geodetic coordinates (x2, y2) to a position (P1) of geodesic coordinates (x1, y1), without requiring the re-ascension of the diver (P) to the surface (S) of the water, the device (1) being configured for the implementation of the following steps:
a) determination of the geodetic coordinates (x1, y1) corresponding to the position (P1) of the diver (P), when the floating system (10) is at said position (P1),
b) storage, in the memory (23) of the location unit (2), of the geodetic coordinates (x1, y1),
c) determination of the geodetic coordinates (x2, y2) corresponding to the position (P2) of the diver (P), when the floating system (10) is at said position (P2),
d) storage in the memory (23) of the geodetic coordinates (x2, y2),
e) calculation of the path (T) allowing the diver (P) to go from the position (P2) to the position (P1),
f) display, on the display system (22) of the location unit (2), of instructions indicating to the diver (P) the path (T) to be taken to go to the position (P1) from the position (P2),
wherein prior to step a) and/or prior to step c), the floating system (10) is configured to rise to the surface (S) of the water, and after step a) and/or step c), the floating system (10) is configured to be brought back close to the underwater diver by means of the traction cable (4).

3. The device (1) according to claim 1 or 2, wherein said end (41) of the traction cable (4) fixed to the floating system (10) is called first end (41), the second end (42) of the traction cable (4) being fixed to an accumulator device (43) for the traction cable (4).

4. The device (1) according to one of claims 1 to 3, wherein the accumulator device (43) is a manually operated reel system, comprising a crank (45) for rotationally actuating a winding drum (44).

5. The device (1) according to one of claims 1 to 4, wherein the waterproof casing (3) is resistant to the water pressure at least at a depth of 100 metres, said traction cable (4) being at least equal to 100 metres in length.

6. The device (1) according to one of claims 1 to 5, wherein the floating system (10) is configured so as to receive a thrust force comprised between 0.5 N and 2 N when completely immersed in water.

7. The device (1) according to one of claims 1 to 6, wherein the waterproof casing (3) comprises a receiving portion (32) of the location unit (2) and a fastening portion (33), such that:
- said receiving portion (32) is of hollow cylindrical shape, with an axis (A32), defining a housing for receiving the location unit (2),
- said fastening portion (33) is of conical shape pointing to the opposite of the receiving portion, with an axis (A33) coincident with the axis (A32) of the receiving portion (32), fixed in the extension of the receiving portion (32), said fastening portion (33) fixedly receiving the end (41) of the traction cable (4).

8. The device (1) according to claim 7, wherein the fixing portion (33) is hollow and is made of water permeable fabric.

9. The device (1) according to one of claims 7 or 8, wherein said receiving portion (32) of the waterproof casing (3) has a volume comprised between 400 and 800 cm³.

10. The device (1) according to one of claims 1 to 9, wherein the position sensor (21) of said location unit (2) is a GPS sensor.

11. The device (1) according to claim 2, taken alone or in combination with any one of claims 3 to 10, wherein the instructions displayed by the display system (22) during step d), comprise distance information (id), corresponding to the distance (D21) separating the position (P1) from the position (P2) and heading information (ic), corresponding to the inclination (β21), at the point (P2), relative to the North South direction of the line passing through the position (P1) and through the position (P2).

12. The device (1) according to one of claims 1 to 11, wherein said device (1) comprises a waterproof actuation button (33, 33'), accessible outside the waterproof casing (3), allowing controlling the location unit (2).

13. The device (1) according to one of claims 1 to 12, wherein the location unit (2) includes an acoustic wave emission means (27), configured to emit an acoustic signal from said location unit (2), said acoustic signal being configured to be received by an element distinct from said location unit (2).

14. A method for guiding a diver (P) with the determination of the path (T) to be taken by an underwater diver (P) when he is in a position (P2), to go from said position (P2) of geodetic coordinates (x2, y2) to a position (P1) of geodetic coordinates (x1, y1), implemented by means of a device (1) according to claim 2, taken alone or in combination with any one of claims 3 to 13, said method being implemented without requiring the re-ascension of the diver (P) to the surface (S) of the water, by implementing the following steps:
a) determination of the geodetic coordinates (x1, y1) corresponding to the position (P1) of the diver (P), when the floating system (10) is at said position (P1),
b) storage in the memory (23) of the geodetic coordinates (x1, y1),
c) determination of the geodetic coordinates (x2, y2) corresponding to the position (P2) of the diver (P), when the floating system (10) is at said position (P2),
d) storage in the memory (23) of the geodetic coordinates (x2, y2),
e) calculation of the path (T) allowing the diver (P) to go from the position (P2) to the position (P1),
f) display, on the display system (22), of instructions indicating to the diver (P) the path (T) to be taken to go to the position (P1) from the position (P2),
wherein prior to step a) and/or prior to step c), the floating system (10) is raised to the surface (S) of the water, and after step a) and/or step c), the floating system (10) is brought back close to the underwater diver (P) via the traction cable (4).

15. The method for guiding a diver (P) according to claim 14, wherein the location unit (2) further includes means (28) for determining the heading followed by the diver (P), means (29v) for determining the speed of the diver (P) and means (29t) for determining the displacement time of the diver (P), said method further comprising a step g) of determining the path (T') followed by the diver (P), during which the path (T') followed by the diver (P) is determined from the heading followed by the diver (P) determined by the means (28) for determining the heading followed by the diver (P), the speed of the diver (P) determined by the means (29v) for determining the speed of the diver (P), and the displacement time of the diver (P) determined by the means (29t) for determining the displacement time of the diver (P).
